Europäisches Patentamt

European Patent Office

Office européen des brevets

(19)

(11) Numéro de publication: **0 089 077**
**A2**

(12) **DEMANDE DE BREVET EUROPEEN**

(21) Numéro de dépôt: **83200306.5**

(22) Date de dépôt: **02.03.83**

(51) Int. Cl.³: **C 13 K 1/02**
**C 08 B 1/00**

(30) Priorité: **09.03.82 LU 83990**

(43) Date de publication de la demande:
**21.09.83 Bulletin 83/38**

(84) Etats contractants désignés:
**AT BE CH DE FR GB IT LI LU NL SE**

(71) Demandeur: **SOLVAY & Cie (Société Anonyme)**
**Rue du Prince Albert, 33**
**B-1050 Bruxelles(BE)**

(72) Inventeur: **David, Christiane**
**Avenue des Noisetiers 29**
**B-1170 Bruxelles(BE)**

(72) Inventeur: **Thiry, Philippe**
**Place de la Petite Suisse 11**
**B-1050 Bruxelles(BE)**

(72) Inventeur: **Fornasier, Roberto**
**Avenue J. et P. Carsoel 102**
**B-1180 Bruxelles(BE)**

(54) **Procédé de traitement de matériaux ligno-cellulosiques.**

(57) Procédé de traitement de matériaux ligno-cellulosiques consistant dans une dégradation sélective de la lignine et des hémicelluloses suivie d'une hydrolyse ou d'une réaction de substitution effectuée sur la cellulose devenue accessible.

Ce procédé est utilisable pour l'obtention de glucose ou de cellulose substituée notamment par des fonctions éthers ou esters.

EP 0 089 077 A2

Croydon Printing Company Ltd

0089077

-1-

## Procédé de traitement de matériaux ligno-cellulosiques

Cas S.82/27

SOLVAY & Cie (Société Anonyme)

La présente invention est relative à un procédé de préparation de cellulose substituée ou de glucose à partir de matériaux ligno-cellulosiques.

Il est connu de préparer, du glucose, à partir de cellulose, par hydrolyse.

De tels procédés sont par exemple décrits dans les brevets américains 3 642 580 et 4 097 333.

Ces procédés connus présentent, toutefois, l'inconvénient que la cellulose traitée doit se présenter dans un état relativement pur et dans un état finement divisé (brevet américain 3 642 580). Dans un autre procédé un traitement préalable à l'éthylène des matériaux cellulosiques a été proposé (brevet américain 4 097 333).

L'invention a pour but de proposer un procédé relativement simple et très économique permettant d'augmenter la réactivité de la cellulose contenue dans les matériaux ligno-cellulosiques, de manière à rendre la cellulose accessible à la dégradation hydrolytique, d'une part, et à des réactifs pour fabriquer des dérivés substitués de la cellulose, d'autre part, sans qu'il soit nécessaire de soumettre les matériaux ligno-cellulosiques à un traitement préalable long, coûteux ou consommateur d'énergie, comme dans les procédés faisant l'objet des publications citées ci-dessus.

L'invention convient tout particulièrement pour préparer de la cellulose très apte à une dégradation hydrolytique par voie biochimique avec obtention de concentrations en glucose élevées.

A cet effet, suivant l'invention, on soumet d'abord les matériaux ligno-cellulosiques à une dégradation sélective de la lignine et des hémicelluloses et ensuite on soumet la cellulose ainsi rendue accessible à une hydrolyse, notamment pour former du glucose, ou à une réaction de substitution, pour former de la cellulose substituée.

-2-

Différents types d'hydrolyse peuvent être effectués sur la cellulose rendue accessible. Elle peut être de type chimique. Elle peut être de type biochimique. Elle peut être de type mixte et comporter simultanément des opérations chimiques ou biochimiques. De préférence toutefois on réalise une hydrolyse de type biochimique. La cellulose rendue accessible peut être utilisée dans d'autres types de réactions et peut être notamment impliquée dans des opérations de substitution. Dans ce cas de bons résultats ont été obtenus pour ce qui concerne la formation d'éthers ou d'esters.

Avantageusement, suivant l'invention, on soumet les matériaux ligno-cellulosiques à la dégradation sélective susdite dans un solvant oxydant de manière à dégrader au moins partiellement la lignine et les hémicelluloses en des composés solubles, tout en maintenant la cellulose ainsi rendue accessible à l'état solide.

Suivant une forme de réalisation préférentielle de l'objet de l'invention, on utilise pour la dégradation sélective une solution halogénée oxydante, notamment une solution d'hypochlorite et de préférence d'hypochlorite des métaux appartenant aux groupes Ia et IIa du Tableau Périodique de la classification internationale des éléments et tout particulièrement avec une solution d'hypochlorite de sodium.

D'autres détails et particularités de l'invention ressortiront de la description donnée ci-après, à titre d'exemples non-limitatifs, de quelques formes de réalisation particulières de l'objet de l'invention.

Le procédé suivant l'invention concerne un traitement de dégradation contrôlée de la lignine des matériaux cellulosiques qui permet de rendre la fraction cellulosique accessible aux réactifs chimiques ou biochimiques, de manière à faire subir à cette cellulose une hydrolyse ou une substitution avec un rendement de réaction élevé sans qu'il soit nécessaire de soumettre préalablement ces matériaux ligno-cellulosiques à des prétraitements longs, coûteux et consommateurs d'énergie.

Ces matériaux ligno-cellulosiques traités suivant l'invention présentent une teneur en lignine qui est généralement comprise

-3-

entre 10 et 50 % en poids par rapport au poids sec de départ de ces matériaux.

Ainsi, ces matériaux ligno-cellulosiques peuvent être formés par des particules de bois, de paille, de bagasse, d'épis de maïs et/ou de déchets ligno-cellulosiques industriels.

Ces matériaux se présentent avantageusement sous forme de particules solides dont les dimensions sont telles que la cellulose reste protégée par un réseau de lignine et que la cellulose rendue accessible, après la dégradation sélective précitée, présente des propriétés limitées de gonflement.

Ceci permet d'utiliser, pour des réactions ultérieures, notamment l'hydrolyse ou la substitution, des concentrations relativement importantes de la cellulose rendue accessible, qui peuvent varier entre 2 et 30 % en poids et généralement entre 5 et 28 % en poids. De préférence ces concentrations sont comprises entre 20 et 25 % en poids par rapport au volume réactionnel mis en oeuvre.

Ces matériaux ligno-cellulosiques bruts sont soumis à une dégradation sélective de la lignine et des hémicelluloses dans un solvant oxydant, de manière à dégrader au moins partiellement la lignine et les hémicelluloses en des composés solubles, tout en maintenant la cellulose rendue accessible à l'état solide. Si on le désire, les hémicelluloses, préalablement au traitement dans le procédé selon l'invention, peuvent être extraites partiellement ou totalement des matériaux ligno-cellulosiques sans que cela n'affecte le procédé selon l'invention. Pour ce faire tout procédé connu à cet effet peut être mis en oeuvre.

Le fait que les particules utilisées présentent en moyenne une épaisseur comprise entre 0,01 mm et 10 mm permet une attaque progressive de la lignine par l'agent oxydant.

De cette façon, la lignine non encore attaquée ou partiellement attaquée joue en fait un rôle modérateur pour l'agent oxydant vis-à-vis de la cellulose rendue accessible, de sorte que cette dernière ne subit pratiquement aucune détérioration par l'agent oxydant.

-4-

Il semble donc être utile pour obtenir une sélectivité maximum dans la dégradation du réseau de lignine de n'éliminer, pendant ce traitement de dégradation, que partiellement les produits dégradés provenant de la lignine.

Le réseau de lignine ainsi dégradé peut être extrait quasi quantitativement sous forme soluble en solution aqueuse, légèrement alcaline, entre 50 et 100°C.

Suivant l'invention, il a été constaté que les hypochlorites alcalins et plus particulièrement l'hypochlorite de sodium donnent des excellents résultats pour la dégradation sélective du réseau de lignine, qui protège la fraction cellulose des matériaux ligno-cellulosiques.

La concentration d'hypochlorite de sodium utilisée se situe généralement entre $10^{-2}$ et 4 M, et de préférence entre $10^{-1}$ et 2M. De bons résultats ont été obtenus avec une concentration comprise entre 0,3 et 0,6 M. (molaire).

Avantageusement, le pH du milieu, lors de la dégradation sélective précitée, est maintenu à une valeur comprise entre 2 et 12 et généralement à une valeur comprise entre 5 et 11. De préférence, le pH est maintenu entre 7 et 9, notamment de l'ordre de 8.

Lorsque la cellulose, obtenue par le traitement de dégradation sélective précité, est destinée à subir une opération d'hydrolyse par voie biochimique, le pH du milieu lors de la dégradation sélective précitée est avantageusement maintenu à des valeurs situées entre 5 et 11. On a observé de façon surprenante que l'on obtient des résultats excellents pour des valeurs de pH situées entre 7 et 9 et tout particulièrement à une valeur de pH d'environ 8. Ceci est d'autant plus inattendu que cette même valeur de pH optimal existe quelle que soit le type de matière ligno-cellulosique utilisée. Ceci a été notamment démontré pour des matières ligno-cellulosiques aussi différentes que la paille, le bois de sapin et le bois d'eucalyptus.

Les valeurs de pH situées dans les limites préférées peuvent être obtenues selon toutes les techniques connues à cet effet. On peut notamment partir d'une solution industrielle, dans le cas de l'hypochlorite de sodium, de pH supérieur à 11 et ajouter un acide jusqu'à obtention du pH choisi; une autre façon de procéder consiste à fabriquer directement in situ les produits. Dans le cas de l'hypochlorite de sodium, le pH désiré peut être obtenu par addition des quantités stoechiométriquement requises de NaOH et de $Cl_2$ pour ce faire.

La température de réaction peut être comprise entre 0 et 90°C et est généralement la température ambiante, tandis que la durée de la réaction est généralement comprise entre 5 et 500 minutes et est de préférence de l'ordre de 30 à 60 minutes.

Afin d'augmenter l'homogénéité de la dégradation, on peut procéder, avantageusement, en deux étapes successives, l'une de diffusion en conditions de réactivité faible, p.e. basse température et/ou pH extrêmes, notamment pH inférieur à 3 ou supérieur à 11, l'autre étape d'attaque comprenant une variation brusque de température ou de pH pour rendre le milieu réactif au sein des matériaux à traiter.

Afin de réduire au minimum la consommation en agent oxydant, celui-ci peut être recyclé après en avoir séparé le matériau traîté.

Par ailleurs, la cellulose rendue accessible et séparée de l'agent oxydant est soumise à son tour à une dégradation hydrolytique par un agent biochimique ou chimique, jusqu'à obtenir notamment du glucose.

Cette dégradation hydrolytique constitue en fait un procédé connu en soi. L'agent biochimique utilisé peut par exemple être un complexe enzymatique immobilisé ou non, et notamment un complexe cellulolytique provenant d'un micro-organisme, comme par exemple le Trichoderma viride. L'agent biochimique peut aussi être fabriqué directement in situ par production de microorganismes libérant le complexe enzymatique d'hydrolyse. Si un agent chimique est utilisé, celui-ci peut être un acide, une base ou un oxydant.

De la même manière, pour la préparation de dérivés substitués de cellulose à partir de cette cellulose rendue accessible par le procédé décrit ci-dessus, on peut également faire appel à des procédés connus, tels que la formation d'éthers ou d'esters, suivant la nature du substituant désiré.

-6-

Le procédé suivant l'invention sera illustré d'une façon plus concrète par les exemples donnés ci-après.

EXEMPLE 1 - Formation de glucose au départ de paille et de bois de sapin par hydrolyse enzymatique à différents pH

Essai 1

1,5 g d'un substrat formé par de la paille brisée sont traités pendant 30 min., à température ordinaire, dans 50 ml d'une solution aqueuse d'hypochlorite de sodium à pH 5, à la concentration approximative de $6.10^{-1}$ molaire en hypochlorite.

Ensuite, la partie restant solide du substrat est soumise à trois lavages successifs à l'eau (50 ml), puis est séchée à 60°C pendant 24 h.

Au stade suivant, 250 mg du substrat séché, contenant la cellulose rendue accessible, sont soumis à une hydrolyse enzymatique dans une solution maintenue à 45°C et contenant, comme tampon, 10 ml de citrate, à un pH de 4,8, et 10 mg de cellulase de Trichoderma viride "onozuka". Ce même traitement est alors effectué sur 1,5 g de substrat formé par de la sciure de bois ("soft wood", sapin blanc).

Les résultats obtenus après une hydrolyse de 24 h et de 72 h sont donnés ci-après et comportent une comparaison avec des substrats de paille et de bois n'ayant pas subi la dégradation sélective préalable au moyen de la solution d'hypochlorite.

| Substrat | 24 h glucose g $L^{-1}$ | 72 h glucose g $L^{-1}$ | Concentration en glucose à 100% de conversion de la cellulose   g $L^{-1}$ |
|---|---|---|---|
| paille | 1 | 1,6 | 11,0 |
| paille + hypochlorite à pH 5 | 2,2 | 4,8 | 13,8 |
| bois de sapin | 1 | 1,5 | 12,1 |
| bois de sapin     + hypochlorite à pH 5 | 0,68 | 2,5 | 13,8 |
| cellulose | 5,3 | 9,0 | 25,9 |
| cellulose     + hypochlorite à pH 5 | 1,9 | 3,5 | 23,5 |

Les rendements d'hydrolyse de la cellulose contenue dans les échantillons traités au moyen de la solution d'hypochlorite après 96 h sont les suivants :

| | |
|---|---|
| paille | 40 % |
| bois | 24 % |
| "cellulose pure" | 18 % |

Essai 2

On répète l'essai 1 mais en travaillant avec de l'hypochlorite de sodium de pH 7.

Les résultats en glucose après 24 h et 72 h sont :

| Substrat | 24 h glucose g $L^{-1}$ | 72 h glucose g $L^{-1}$ | Concentration en glucose à 100 % de conversion de la cellulose g $L^{-1}$ |
|---|---|---|---|
| paille<br>  + hypochlorite à pH 7 | 3,2 | 7,5 | 16,8 |
| bois de sapin<br>  + hypochlorite à pH 7 | 2,3 | 6,3 | 16,2 |

Les rendements d'hydrolyse de la cellulose contenue dans les échantillons traités au moyen de la solution d'hypochlorite après 96 h sont les suivants :

| | |
|---|---|
| paille | 54 % |
| bois de sapin | 45 % |
| "cellulose pure" | 18 % |

Essai 3

On répète l'essai 1 mais en travaillant avec de l'hypochlorite de sodium de pH 9.

Les résultats en glucose après 24 h et 72 h sont :

| Substrat | 24 h glucose g $L^{-1}$ | 72 h glucose g $L^{-1}$ | Concentration en glucose à 100% de conversion de la cellulose g $L^{-1}$ |
|---|---|---|---|
| paille<br>  + hypochlorite à pH 9 | 3,3 | 8,0 | 15,3 |
| bois de sapin<br>  + hypochlorite à pH 9 | 2,5 | 6,6 | 13,8 |

Les rendements d'hydrolyse de la cellulose contenue dans les échantillons traités au moyen de la solution d'hypochlorite après 96 h sont les suivants :

paille                63 %

bois de sapin         57 %

"cellulose pure"      25 %

Essai 4

On répète l'essai 1 mais en travaillant avec de l'hypochlorite de sodium de pH 11,5.

Les résultats en glucose après 24 h et 72 h sont :

| Substrat | 24 h glucose g L$^{-1}$ | 72 h glucose g L$^{-1}$ | Concentration en glucose à 100 % de conversion de la cellulose g L$^{-1}$ |
|---|---|---|---|
| paille <br> + hypochlorite à pH 11,5 | 2,9 | 6,2 | 14,4 |
| bois de sapin <br> + hypochlorite à pH 11,5 | 1,5 | 2,5 | 14,0 |

Les rendements d'hydrolyse de la cellulose contenue dans les échantillons traités au moyen de la solution d'hypochlorite après 96 h sont les suivants :

paille                46 %

bois de sapin         18 %

"cellulose pure"      27 %

EXEMPLE 2 - Formation de glucose au départ de bois d'eucalyptus par hydrolyse enzymatique à différents pH

Essai 1

6 g d'un substrat formé par de la farine d'eucalyptus sont traités pendant 30 min., à température ordinaire, dans 200 ml d'une solution aqueuse d'hypochlorite de sodium de concentration de $5.10^{-1}$ mole.L$^{-1}$, amenée à pH 2 avant ajout du substrat.

Ensuite, la partie restant solide du substrat est soumise à trois lavages successifs à l'eau (50 ml), puis est séchée à 60°C pendant 36 heures.

Au stade suivant, 250 mg du substrat séché, contenant la cellulose rendue accessible, sont soumis à une hydrolyse enzymatique dans une solution maintenue à 45°C et contenant, comme tampon, 10 ml de citrate, à un pH de 4,8, et 10 mg de cellulase de Trichoderma viride "onozuka".

Les résultats obtenus en glucose après une hydrolyse de 24 h et de 72 h sont de 0 g $L^{-1}$.

Les rendements d'hydrolyse de la cellulose contenue dans les échantillons traités au moyen de la solution d'hypochlorite est nul après 96 h.

Essais 2, 3, 4, 5 et 6

On répète l'essai 1 mais on opère avec de l'hypochlorite de sodium de pH 5 (essai 2), pH 7 (essai 3), pH 8 (essai 4), pH 9 (essai 5) et pH 11,5 (essai 6).

Pour les différents essais, les résultats obtenus en glucose après une hydrolyse de 24 h et de 72 h sont donnés au tableau 1 ci-après.

TABLEAU 1

| ESSAIS | 24 h glucose g $L^{-1}$ | 72 h glucose g L-1 | Concentration en glucose à 100 % de conversion de la cellulose, g $L^{-1}$ |
|---|---|---|---|
| 2 | 0,8 | 1,1 | 12,1 |
| 3 | 2,5 | 3,3 | 13,7 |
| 4 | 4,0 | 5,8 | 15,1 |
| 5 | 2,8 | 3,3 | 13,3 |
| 6 | 0,6 | 0,6 | 13,0 |

-11-

Par ailleurs, les rendements d'hydrolyse de la cellulose contenue dans les échantillons traités au moyen de la solution d'hypochlorite après 96 h sont repris au tableau 2 ci-après.

TABLEAU 2

| ESSAIS | Rendement après 96 h |
|--------|----------------------|
| 2 | 10 % |
| 3 | 25 % |
| 4 | 41 % |
| 5 | 26 % |
| 6 | 5 % |

On peut déduire des résultats des exemples 1 et 2 qu'il existe une zone de pH, comprise entre 7 et 9, à laquelle l'hypochlorite de sodium exerce un effet particulier d'attaque des matières ligno-cellulosiques quelle que soit leur origine, qui se traduit par une meilleure hydrolyse biochimique de la matière cellulosique contenue dans la matière ligno-cellulosique traitée au moyen de la solution d'hypochlorite.

EXEMPLE 3 - Formation d'un ester de cellulose par voie basique au départ de bois et de paille

1,5 g de paille ont été traités par 25 ml d'une solution aqueuse d'hypochlorite industriel pendant 1 h à température ordinaire. Le substrat ainsi traité a ensuite été filtré de manière à retenir, comme produit solide, un matériau cellulosique rendu accessible.

Ensuite, on a ajouté 5 ml de NaOH à 18 % qu'on a laissé réagir pendant 1 h à température ambiante.

Dans un stade suivant, on a ajouté 0,8 ml de $CS_2$ et on a laissé réagir ce réactif à température ordinaire pendant environ 16 h.

On a ajouté alors 25 ml d'eau et 25 ml de NaOH 3 %, de manière à dissoudre pratiquement complètement le xanthate obtenu.

Celui-ci a été précipité dans l'acide sulfurique, lavé trois fois de suite et séché.

-12-

Cet exemple a été répété avec un substrat formé de sciure de bois de sapin.

Le poids de cellulose régénérée obtenue à partir du substrat de paille était de l'ordre de 42 % et, à partir d'un substrat de bois de sapin, de l'ordre de 50 % du poids du substrat sec avant traitement.

Des saccharifications quantitatives ont montrées qu'il s'agissait d'un composé contenant plus de 95 % de sucres réducteurs, dont plus de 90 % sous forme de glucose.

EXEMPLE 4 - Formation d'un ester de cellulose par voie acide au départ de bois et de paille

2 g de paille ont été traités par 30 ml d'une solution aqueuse d'hypochlorite industriel pendant 1 h à température ordinaire.

Le résidu solide a ensuite été filtré et rincé par 50 ml d'eau.

Deux expériences ont été faites parallèlement : dans le première (A), le substrat ainsi traité a été utilisé tel quel, dans la seconde (B), la lignine a été extraite 1 h à 80°C par 30 ml de solution de NaOH 0,1 molaire, le substrat étant alors filtré puis rincé par 50 ml d'$H_2O$.

Les substrats (A) et (B) ont alors été activés 3 fois par agitation en présence de 20 ml d'acide acétique glacial suivie d'une filtration sur un filtre Büchner. On a ajouté ensuite 18 ml d'acide acétique glacial et 0,1 ml d'$H_2SO_4$ concentré et laissé sous agitation pendant 1 h.

5 ml d'anhydride acétique ont alors été ajoutés sous agitation vigoureuse; on a laissé réagir pendant 30 minutes.

On a ajouté ensuite 0,75 ml d'$H_2O$ et 1,75 ml d'acide acétique et on a agité pendant 30 minutes.

On a dilué alors par 30 ml de l'acide acétique ayant servi à l'activation.

On a reprécipité goutte à goutte dans 2 l d'eau agitée vigoureusement, on a filtré et on a lavé 2 fois par 500 ml d'eau : on a repris le précipité dans 500 ml $H_2O$ et on a neutralisé jusqu'au virage de la phénolphtaléine par du carbonate de sodium dilué.

-13-

Le produit a ensuite été filtré, séché et dissout dans 100 ml d'un mélange dichlorométhane-méthanol (90-10).

On a filtré à nouveau et on a observé dans le cas (A) la formation d'un gel qui ralentissait la filtration.

Par contre, dans le cas (B), presque tout le produit était soluble et se filtrait instantanément.

On a évaporé le solvant au rotavapor et on a séché sous vide.

Cet exemple a été répété avec une même quantité de sciure de bois (sapin blanc).

Les poids récupérés étaient

| Substrat | Cas (A) | Cas (B) |
|----------|---------|---------|
| paille | 1,15 g | 1,3 g |
| bois | 1,06 g | 1,37 g |

La récupération maximum, tenant compte de la quantité de cellulose, présente dans les produits de départ, et de ce que le nombre d'acétylation serait de l'ordre de 2,8 à 3 par unité de glucose, devant être d'environ 1,3 g pour la paille et 1,4 g pour le bois.

EXEMPLE 5 - <u>Formation d'un éther de cellulose au départ de paille et de bois de sapin</u>

2 g d'un substrat de sciure de bois de sapin ont été mis en réaction avec 30 ml d'une solution aqueuse d'hypochlorite industriel pendant 1 h. à température ordinaire.

Le produit solide de réaction obtenu a été ensuite séparé par filtration.

On a ajouté ensuite 7 ml de NaOH 18 % et on a agité 1 h. à température ordinaire.

25 ml d'isopropanol et 1 g d'acide chloracétique ont alors été ajoutés.

L'ensemble a été porté à reflux pendant 3 h.

On a filtré et le précipité a été repris dans de l'eau et laissé pendant 30 minutes à 100°C.

-14-

Enfin, par filtration, on a séparé la carboxyméthylcellulose qui gonflait sous forme d'un gel incolore, les résidus colorés étant éliminés dans l'eau.

La quantité de carboxyméthylcellulose obtenue était de 900 mg.

Cet exemple a été répété avec une même quantité de paille, qui a permis d'obtenir 650 mg de carboxyméthylcellulose.

On peut déduire des exemples 3, 4 et 5 qu'un traitement avec l'hypochlorite de sodium d'une matière ligno-cellulosique permet d'obtenir de la cellulose d'une réactivité comparable voire supérieure à celle d'une cellulose issue d'autres origines que de la matière ligno-cellulosique.

Il est bien entendu que l'invention n'est pas limitée aux formes de réalisation décrites et que bien des variantes peuvent être envisagées sans sortir du cadre de la présente invention.

C'est ainsi que les matériaux ligno-cellulosiques mis en oeuvre suivant l'invention peuvent être de nature très variable.

Par ailleurs, tout traitement de matériaux ligno-cellulosiques ayant subi la dégradation sélective suivant l'invention qui, même sans passer par une phase d'isolement du glucose, comporte une hydrolyse de la cellulose, reste dans le cadre de la présente invention; ceci comprend notamment la production de proteïnes bactériennes; la fermentation alcoolique ou acetono-butylique, ou la production par des microorganismes d'autres molécules comme les acides aminés, acides nucleïques ou acides organiques.

R E V E N D I C A T I O N S

1 - Procédé de préparation de cellulose substituée ou de glucose à partir de matériaux ligno-cellulosiques, caractérisé en ce qu'on soumet d'abord les matériaux à une dégradation sélective de la lignine et des hémicelluloses et à ce qu'ensuite on soumet la cellulose ainsi rendue accessible à une hydrolyse, notamment pour former du glucose, ou à une réaction de substitution, pour former de la cellulose substituée.

2 - Procédé suivant la revendication 1, caractérisé en ce qu'on traite des matériaux ligno-cellulosiques formés par de grossières particules de bois de paille, de bagasse, d'épis de maïs et/ou de déchets ligno-cellulosiques industriels.

3 - Procédé suivant l'une quelconque des revendications 1 à 2, caractérisé en ce qu'on soumet les matériaux ligno-cellulosiques à une dégradation sélective de la lignine et des hémicelluloses dans un solvant oxydant de manière à dégrader au moins partiellement la lignine et les hémicelluloses en des composés solubles, tout en maintenant la cellulose rendue accessible à l'état solide.

4 - Procédé suivant la revendication 3, caractérisé en ce qu'on utilise pour la dégradation sélective une solution d'un composé halogéné oxydant.

5 - Procédé suivant la revendication 4, caractérisé en ce qu'on utilise comme composé halogéné oxydant de l'hypochlorite, de préférence l'hypochlorite de sodium.

6 - Procédé suivant la revendication 5, caractérisé en ce qu'on travaille, lors de la dégradation sélective, à un pH compris entre 12 et 2, et de préférence entre 9 et 7.

7 - Procédé suivant la revendication 6, caractérisé en ce qu'on maintient le pH à une valeur de l'ordre de 8.

8 - Procédé suivant l'une quelconque des revendications 1 à 7, caractérisé en ce qu'on procède en au moins deux étapes successives, l'une de diffusion, en conditions de réactivité faible, notamment à

-16-

température ambiante et une valeur de pH inférieure à 3 ou supérieure à 11, l'autre étape d'attaque comprenant une variation brusque de température et/ou de pH pour rendre le milieu réactif au sein des matériaux à traiter.

9 - Procédé suivant la revendication 1, caractérisé en ce que l'on prépare du glucose par une dégradation hydrolytique par un agent biochimique de la cellulose rendue accessible par une dégradation sélective de la lignine et des hemicelluloses à partir de matières ligno-cellulosiques dans un solvant oxydant à un pH compris entre 5 et 11.

10 - Procédé suivant la revendication 1, caractérisé en ce que le pH est maintenu entre 7 et 9.

11 - Procédé suivant la revendication 1, caractérisé en ce que la cellulose rendue accessible est soumise à une réaction de substitution par voie basique : estérification ou étherification, ou par voie acide : estérification.